# EUROPÄISCHE PATENTSCHRIFT

(11) **EP 2 964 978 B1**
(45) Veröffentlichungstag und Bekanntmachung des Hinweises auf die Patenterteilung: **01.02.2017**
(21) Anmeldenummer: 14707653.3
(22) Anmeldetag: 27.02.2014
(51) Int. Cl.: F16H 61/00, F16D 48/06, F16H 61/688

(54) **HYDRAULIKSYSTEM FÜR EIN DOPPELKUPPLUNGSGETRIEBE**
HYDRAULIC SYSTEM FOR A DUAL-CLUTCH TRANSMISSION
SYSTÈME HYDRAULIQUE POUR UNE TRANSMISSION À DOUBLE EMBRAYAGE

(30) Priorität: 06.03.2013 DE 102013003894
(43) Veröffentlichungstag der Anmeldung: 13.01.2016
(73) Patentinhaber: Audi AG, 85045 Ingolstadt (DE)
(72) Erfinder: BARTL, Florian, 86673 Bergheim (DE)
(74) Vertreter: Lehle, Josef
(86) Internationale Anmeldenummer: PCT/EP2014/000520
(87) Internationale Veröffentlichungsnummer: WO 2014/135257

(56) Entgegenhaltungen:
- EP-A2- 2 520 832
- DE-A1-102007 037 589
- DE-A1-102010 042 194
- US-A1- 2005 143 224
- US-A1- 2012 144 946

## Beschreibung

Die Erfindung betrifft ein Doppelkupplungsgetriebe für ein Fahrzeug sowie ein Verfahren zur Durchführung eines Druckreduziermodus in einem solchen Hydrauliksystem.

Ein Doppelkupplungsgetriebe gemäß dem Oberbegriff des Anspruchs 1 ist aus US2012/144946A bekannt.

Bei einem Doppelkupplungsgetriebe ist mittels zweier Teilgetriebe ein vollautomatischer Gangwechsel ohne Zugkraftunterbrechung ermöglicht. Die Übertragung des Momentes erfolgt über eine von zwei Kupplungen, die die zwei Teilgetriebe mit dem Antrieb verbinden. Dadurch erfolgt ein Gangwechsel ohne Zugkraftunterbrechung, indem gleichzeitig eine der Kupplungen schließt, während die andere öffnet.

Die Kupplungen sowie die Schaltelemente zum Einlegen der Gänge sind üblicherweise hydraulisch ansteuerbar. Das hierzu erforderliche Hydrauliksystem arbeitet im Fahrbetrieb bei einem Speicherdruck zum Beispiel in einer Größenordnung von 30 bar, der von einem Druckspeicher des Hydrauliksystems bereitgestellt ist. In den, zu den Hydraulikzylindern der beiden Kupplungen sowie der Gangschaltelemente geführten Druckleitungen sind jeweils, von einer Steuereinheit elektrisch ansteuerbare Steuerventile angeordnet. Mit Hilfe der Steuerventile kann der an der ersten Kupplung und der zweiten Kupplung anliegende Hydraulikdruck eingestellt werden. Der Steuereinheit sind außerdem erste und zweite Drucksensoren zugeordnet, die jeweils den an der ersten Kupplung und an der zweiten Kupplung anliegenden Hydraulikdruck überwachen. Wenn zum Beispiel die erfassten Drucksensor-Signale nicht mit dem Betätigungszustand der ersten/zweiten Kupplung korrespondieren, so kann die Steuereinheit einen Fehlbetrieb des Doppelkupplungsgetriebes erkennen.

Durch die sehr geringen Spaltmaße von Steuerventilen in der Hydraulik und aufgrund der relativ dazu großen Öl-Additive kann es bei hohem Speicherdruck sowie bei längeren Fahrzeug-Standphasen (zum Beispiel Überseetransport, Urlaub, etc.) zu Ablagerungen an den Ventilspalten kommen. Diese Ablagerungen führen zu Komfort/Funktionseinbußen. Das vollständige Entleeren des Druckspeichers wäre als Gegenmaßnahme zwar geeignet.

Aus diesem Grund kann bei Detektion längerer Fahrzeug-Standphasen der Druckspeicher des Hydrauliksystems vollständig entleert werden, was jedoch energetisch nicht sinnvoll ist. Alternativ kann der Speicherdruck auf zum Beispiel 10 bar reduziert werden. Dadurch werden einerseits Hydrauliköl-Ablagerungen in den Steuerventilen verhindert. Andererseits kann trotzdem zumindest ein Teil der im Hydrauliksystem gespeicherten Druckenergie beim Druckaufbau für den nächsten Fahrbetrieb genutzt werden.

Die Aufgabe der Erfindung besteht darin, ein Doppelkupplungsgetriebe mit einem Hydrauliksystem bereitzustellen, bei dem der Druckreduziermodus ohne zusätzlichen sensortechnischen Aufwand betriebssicher durchführbar ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass im aus dem Stand der Technik bekannten Druckreduziermodus die Steuereinheit ein Hydraulik-Steuerventil mit einer vorgegebenen Anzahl von Stellbewegungen zyklisch zwischen der Offen- und Geschlossenstellung hin- und herverstellt, so dass es als Folge einer Leckage zu Druckverlusten und damit zu einem reduzierten Speicherdruck kommt. Die Anzahl von Stellbewegungen des HydraulikSteuerventils ist so gewählt, dass in jedem Fall die Gefahr von ÖlAblagerungen beseitigt ist, ohne jedoch genauere Informationen über den IstSpeicherdruck zu haben. Vor diesem Hintergrund wird gemäß dem kennzeichnenden Teil des Patentanspruches 1 die Steuereinheit im Druckreduziermodus in einem Regelkreis eingebunden, bei dem der, den an der ersten Kupplung anliegenden Hydraulikdruck erfassende erste Drucksensor die Speicherdruck-Istwerterfassung übernimmt. Die Speicherdruck-Istwerterfassung wird also durch den aus Sicherheitsgründen ohnehin erforderlichen Drucksensor durchgeführt. Ein zusätzlicher Drucksensor im Bereich des Druckspeichers ist dagegen im Hinblick auf eine Bauteilreduzierung nicht erforderlich. Beim erfindungsgemäßen Druckreduziermodus die Steuereinheit das, der ersten Kupplung zugeordnete Steuerventil durchgängig beziehungsweise dauerhaft in eine Offenstellung. Der der ersten Kupplung zugeordnete erste Drucksensor ist daher während des Druckreduziermodus durchgängig mit dem Speicherdruck beaufschlagt.

Der erste Drucksensor liegt strömungstechnisch in der Druckleitung zwischen dem ersten Steuerventil und dem Hydraulikzylinder der ersten Kupplung. Der zweite Drucksensor liegt strömungstechnisch in der Druckleitung zwischen dem zweiten Steuerventil und dem Hydraulikzylinder der zweiten Kupplung.

Von Vorteil ist es, wenn die im Druckreduziermodus erfolgende Speicherdruck-Reduzierung ohne zusätzliche Druckreduzier-Komponenten, etwa einem Druckablassventil, auskommt, sondern bereits vorhandene Komponenten in Doppelfunktion auch im Druckreduziermodus verwendet werden. Bevorzugt kann daher zur Druckreduzierung das der zweiten Kupplung zugeordnete Steuerventil zyklisch zwischen seiner Offenstellung und seiner Geschlossenstellung verstellt werden. Auf diese Weise kommt es als Folge einer Hydrauliköl-Leckage bei der Stellbewegung zu Druckverlusten und damit zu dem reduzierten Speicherdruck. Die Steuereinheit kann im Druckreduziermodus das Steuerventil der zweiten Kupplung mittels einer geeigneten Funktion ansteuern, zum Beispiel eine trapezförmige Ansteuerung, bei der das Steuerventil der zweiten Kupplung zyklisch geschlossen und geöffnet wird, wodurch der Speicher langsam entleert wird. Im obigen Fall wirkt daher das der zweiten Kupplung zugeordnete Steuerventil als ein Stellglied des Regelkreises.

Alternativ oder zusätzlich zum Steuerventil der zweiten Kupplung können auch die den Gangschaltelementen zugeordneten Steuerventile zyklisch zwischen der Offen- und Geschlossenstellung hin- und herbewegt werden, um durch Hydrauliköl-Leckage einen Druckabfall zu erreichen. Im Hinblick auf eine Feinjustierung des Speicherdruckes auf einen reduzierten Wert ist jedoch die alleinige Verwendung des der zweiten Kupplung zugeordneten Steuerventils von Vorteil.

Die beiden, der ersten und der zweiten Kupplung zugeordneten Drucksensoren erfüllen im normalen Fahrbetrieb eine Sicherheitsfunktion, bei der überwacht wird, ob die erste Kupplung oder die zweite Kupplung drucklos beziehungsweise druckbeaufschlagt ist. Abgesehen von den beiden, ohnehin aus Sicherheitsgründen erforderlichen Drucksensoren ist für die Durchführung des erfindungsgemäßen Druckreduziermodus kein zusätzlicher Drucksensor zur Speicherdruck-Istwerterfassung vorzusehen. Die Druckleitungen zwischen dem Druckspeicher und den Steuerventilen der Kupplungen sowie der Gangschaltelemente sind daher bauteiltechnisch bevorzugt frei von weiteren Drucksensoren.

Im normalen Fahrbetrieb kann der vom Speicherdruck vorgegebene Speicherdruck in einer Größenordnung von 30 bar liegen. Nach erfolgtem Druckreduziermodus kann der Speicherdruck von diesen 30 bar auf einen Bereich von 0 bis 10 bar reduziert sein.

Der Druckreduziermodus kann auf der Grundlage von, durch die Steuereinheit erfassten Eingangsparametern aktiviert werden. Beispielsweise wird der Druckreduziermodus aktiviert, wenn die Steuereinheit detektiert, dass das Fahrzeug stillgelegt ist und der Fahrer das Fahrzeug verlassen hat. Alternativ dazu kann der Druckreduziermodus durch eine werksseitige Betätigung eines Transportschalters aktiviert werden, und zwar für den Fall einer längeren Auslieferzeit.

Das Hydrauliksystem des Doppelkupplungsgetriebes kann in einen Kupplungs-Hydraulikkreis und in einen Gangsteller-Hydraulikkreis aufgeteilt werden, die beide vom Druckspeicher mit Speicherdruck beaufschlagt werden. Über den Kupplungs-Hydraulikkreis werden die ersten und zweiten Kupplungen hydraulisch angesteuert. Über den Gangsteller-Hydraulikkreis werden die Schaltelemente hydraulisch angesteuert. Bevorzugt ist im Druckreduziermodus der Gangsteller-Hydraulikkreis drucklos geschaltet, das heißt durch entsprechende Positionierungen der Steuerventile stillgelegt.

Die Erfindung und ihre vorteilhaften Aus- und Weiterbildungen sowie deren Vorteile werden nachfolgend anhand von Zeichnungen näher erläutert.

Es zeigen:
- Fig. 1: ein Blockschaltbild eines Doppelkupplungsgetriebes für ein Kraftfahrzeug mit sieben Vorwärtsgängen sowie einem Rückwärtsgang;
- Fig. 2: das Hydrauliksystem des Doppelkupplungsgetriebes aus der Fig. 1; und
- Fig. 3: eine Ansicht entsprechend der Fig. 2, anhand der der Druckreduziermodus veranschaulicht ist.

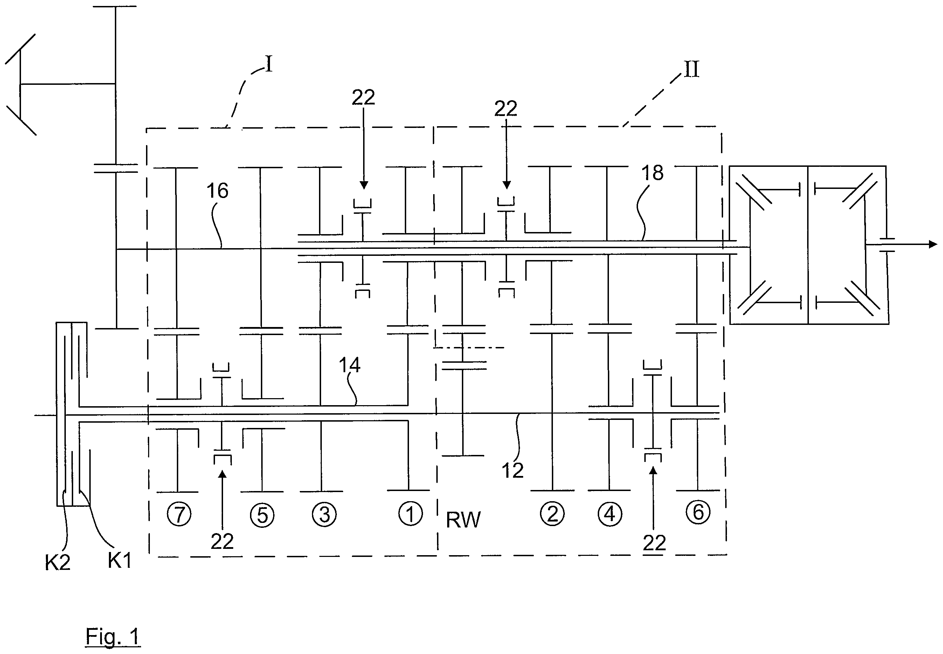

In der Fig. 1 ist ein Blockschaltbild eines Doppelkupplungsgetriebes für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1 und K2 alternierend mit der Antriebsquelle, zum Beispiel eine (nicht dargestellte) Brennkraftmaschine, verbindbar sind. Die Eingangswelle 14 ist als Hohlwelle ausgeführt, in der die als Vollwelle ausgeführte Eingangswelle 12 geführt ist. Die Eingangswellen 12, 14 treiben über Zahnradsätze der Vorwärtsgänge 1 bis 7 und einen Rückwärtsgang RW auf eine achsparallel angeordnete Abtriebswelle 16 und eine als Hohlwelle gebildete Zwischenwelle 18. Die Zahnradsätze der Vorwärtsgänge 1 bis 7 weisen jeweils Festzahnräder und über Schaltelemente 22 schaltbare Loszahnräder auf. Die Schaltelemente 22 können beispielhaft Doppelsynchronkupplungen sein, die jeweils aus einer Neutralstellung heraus zwei benachbarte Loszahnräder schalten können. Das den dritten Gang schaltende Schaltelement 22 ist dagegen gemäß der Fig. 1 eine Einfachkupplung, die nur ein Loszahnrad auf der Zwischenwelle 18 kuppelt.

Das Teilgetriebe I des Doppelkupplungsgetriebes weist die Zahnräder für die ungeraden Vorwärtsgänge 1, 3, 5 und 7 auf, die über die hohle Eingangswelle 14 angetrieben sind. Dem Teilgetriebe II sind die geraden Vorwärtsgänge 2, 4, 6 und der Rückwärtsgang RW zugeordnet, die über die Kupplung K2 und die Eingangswelle 12 aktivierbar sind, wobei die Gänge durch jeweiliges Schließen der entsprechenden Schaltelemente 22 geschaltet sind.

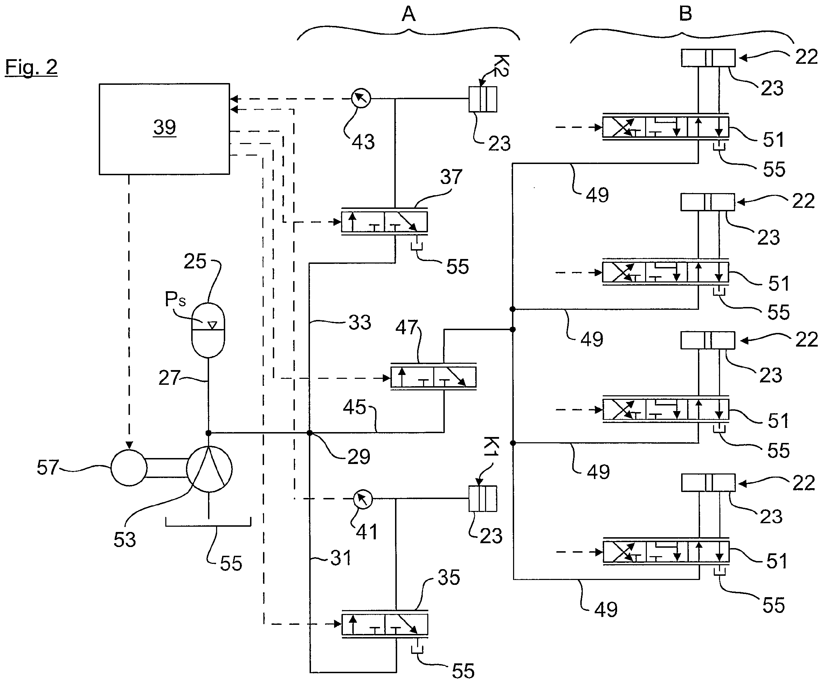

In der Fig. 2 ist das Hydrauliksystem des Doppelkupplungsgetriebes als vereinfachtes Blockschaltbild gezeigt. Mit Hilfe des Hydrauliksystems können die Hydraulikzylinder 23 der Kupplungen K1, K2 sowie der Schaltelemente 22 betätigt werden. In der Fig.2 ist das Hydrauliksystem grob in einen Kupplungs-Hydraulikkreis A und in einen Gangsteller-Hydraulikkreis B aufgeteilt. Die beiden Hydraulikkreise A, B sind über einen Druckspeicher 25 mit dem Speicherdruck p_{S} beaufschlagt. Hierzu ist eine am Druckspeicher 25 angeschlossene Hauptleitung 27 bis zu einer Verzweigungsstelle 29 geführt, an der eine erste Teilleitung 31 zum Hydraulikzylinder 23 der ersten Kupplung K1 und eine zweite Teilleitung 33 zum Hydraulikzylinder 23 der zweiten Kupplung K2 geführt ist. In den beiden Teilleitungen 31, 33 sind jeweils ein erstes Steuerventil 35 und ein zweites Steuerventil 37 angeordnet, die über eine zentrale Steuereinheit 39 ansteuerbar sind. Zudem ist die Steuereinheit 39 einem ersten Drucksensor 41 und einem zweiten Drucksensor 43 signaltechnisch in Verbindung. Die Drucksensoren 41, 43 erfassen jeweils den an der ersten Kupplung K1 und an der zweiten Kupplung K2 anliegenden Hydraulikdruck.

Von der oben genannten Verzweigungsstelle 29 zweigt eine, strömungstechnisch mit dem Gangsteller-Hydraulikkreis B verbundene Verbindungsleitung 45 ab, in der ein weiteres Steuerventil 47 vorgesehen ist. Die Verbindungsleitung 45 teilt sich stromab des Steuerventiles 47 in insgesamt vier Teilleitungen 49 auf, die jeweils über weitere Steuerventile 51 zu den Hydraulikzylindern 23 der Schaltelemente 22 geführt sind.

Zudem weist das Hydrauliksystem eine Druckpumpe 53 auf, die eingangsseitig mit einem Ölsumpf 55 verbunden ist. Die Druckpumpe 53 ist zum Aufladen des Druckspeichers über einen Elektromotor 57 von der Steuereinheit 39 ansteuerbar.

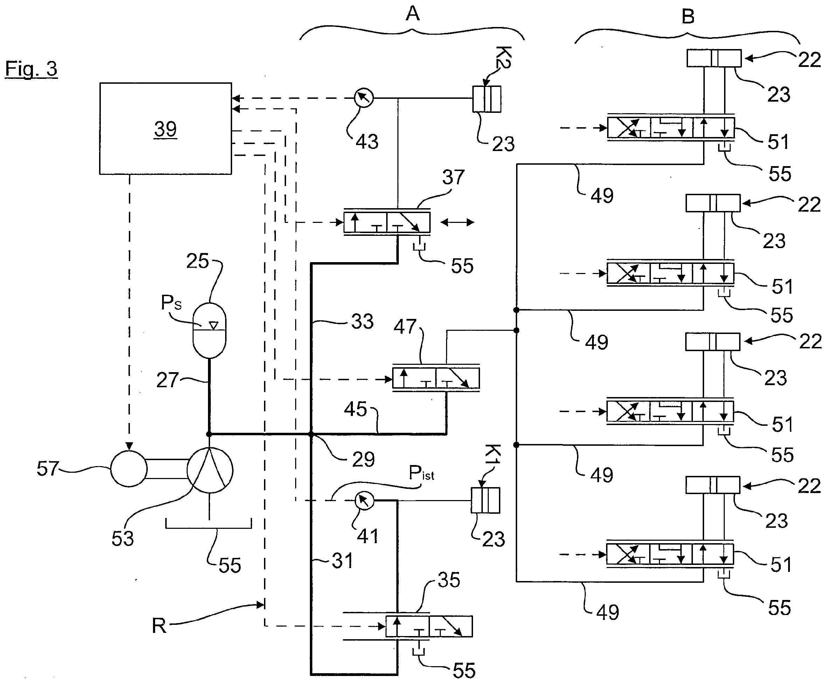

Das Hydrauliksystem weist gemäß der Fig. 2 oder 3 einen Kupplungs-Hydraulikkreis A, mit dem die Kupplungen K1, K2 hydraulisch ansteuerbar sind, und einen Gangsteller-Hydraulikkreis B auf, mit dem die Gangschaltelemente 22 hydraulisch ansteuerbar sind.

Im normalen Fahrbetrieb steuert die Steuereinheit 39 die Steuerventile 35, 37, 47, 51 der Kupplungen K1, K2 und der Gangschaltelemente 22 des Doppelkupplungsgetriebes, um einen vollautomatischen Gangwechsel ohne Zugkraftunterbrechung zu gewährleisten. Die strömungstechnisch unmittelbar vor den Hydraulikzylindern 23 der Kupplungen K1, K2 positionierten ersten und zweiten Drucksensoren 41, 43 erfassen im Fahrbetrieb den an den Kupplungen K1, K2 anliegenden Hydraulikdruck. Der im Fahrbetrieb vom Druckspeicher 25 vorgegebene Speicherdruck pₛ kann beispielhaft in einer Größenordnung von 30 bar liegen.

Nach einer Fahrzeug-Stilllegung kann die Steuereinheit 39 Eingangsparameter erfassen, die auf eine längere Standzeit des Fahrzeugs hindeuten. In diesem Fall aktiviert die Steuereinheit 39 einen Druckreduziermodus, bei dem der vom Druckspeicher 25 bereitgestellte Speicherdruck pₛ reduziert wird.

Im Druckreduziermodus ist der der ersten Kupplung K1 zugeordnete Drucksensor 41 zusammen mit der Steuereinheit 39 in einem Regelkreis R (Fig. 3) eingebunden, bei dem der erste Drucksensor 41 die SpeicherdruckIstwerterfassung p_{Ist} übernimmt. Zudem wird auch das Steuerventil 37 der zweiten Kupplung K2 in dem Regelkreis R eingebunden, und zwar als ein Stellglied, das zyklisch zwischen der Offen- und Geschlossenstellung verstellt wird, so dass es als Folge einer Leckage bei der Stellbewegung zu Druckverlusten und damit zu einem reduzierten Speicherdruck pₛ kommt. Mittels des Regelkreises R wird der Speicherdruck p_{S} von den oben erwähnten 30 bar auf einen von der Steuereinheit 39 vorgebebenen Sollwert von beispielhaft 10 bar reduziert.

Damit das der ersten Kupplung K1 zugeordnete Steuerventil 35 eine einwandfreie Istwert-Erfassung vornehmen kann, ist es im Druckreduziermodus durchgängig in der Offenstellung (Fig. 3). Weiterhin ist im Druckreduziermodus der Gangsteller-Hydraulikkreis B dauerhaft drucklos geschaltet, das heißt stillgelegt.

## Patentansprüche

1. Doppelkupplungsgetriebe für ein Fahrzeug, mit einem Hydrauliksystem zur Betätigung von Hydraulikzylindern (23) der Kupplungen (K1, K2) und der Gangschaltelemente (22) des Doppelkupplungsgetriebes, welches Hydrauliksystem einen Druckspeicher (25) zur Bereitstellung eines Speicherdruckes (pₛ) im Hydrauliksystem aufweist, wobei in den, zu den Hydraulikzylindern (23) der ersten Kupplung (K1) und der zweiten Kupplung (K2) geführten Druckleitungen (31, 33) jeweils ein von einer Steuereinheit (39) ansteuerbares Steuerventil (35, 37) angeordnet ist, mit denen der an der ersten und zweiten Kupplung (K1, K2) anliegende Hydraulikdruck einstellbar ist, welcher Steuereinheit (39) erste und zweite Drucksensoren (41, 43) zugeordnet sind, die den an der ersten und zweiten Kupplung (K1, K2) anliegenden Hydraulikdruck erfassen, und welche Steuereinheit (39) bei Detektion einer längeren Stillstandzeit des Fahrzeugs einen Druckreduziermodus aktiviert, bei dem der vom Druckspeicher (25) bereitgestellte Speicherdruck (pₛ) reduzierbar ist, **dadurch gekennzeichnet, dass** im Druckreduziermodus die Steuereinheit (39) das, der ersten Kupplung (K1) zugeordnete Steuerventil (35) durchgängig öffnet, und dass der der ersten Kupplung (K1) zugeordnete Drucksensor (41) zusammen mit der Steuereinheit (39) in einem Regelkreis (R) eingebunden ist, bei dem der erste Drucksensor (41) die Speicherdruck-Istwerterfassung (P_{Ist}) übernimmt.

2. Doppelkupplungsgetriebe nach Anspruch 1, **dadurch gekennzeichnet, dass** im Druckreduziermodus die Steuereinheit (39) das Steuerventil (37) der zweiten Kupplung (K2) zyklisch zwischen der Offen- und Geschlossenstellung verstellt, so dass es als Folge einer Leckage bei der Stellbewegung zu Druckverlusten und damit zu einem reduzierten Speicherdruck (pₛ) kommt.

3. Doppelkupplungsgetriebe nach Anspruch 1 oder 2, **dadurch gekennzeichnet, dass** das Hydrauliksystem einen Kupplungs-Hydraulikkreis (A), mit dem die Kupplungen (K1, K2) hydraulisch ansteuerbar sind, und einen Gangsteller-Hydraulikkreis (B) aufweist, mit dem die Gangschaltelemente (22) hydraulisch ansteuerbar sind, und dass insbesondere in dem Druckreduziermodus der Gangsteller-Hydraulikkreis (B) drucklos geschaltet ist, das heißt, stillgelegt ist.

4. Doppelkupplungsgetriebe nach einem der vorhergehenden Ansprüche, **dadurch gekennzeichnet, dass** die Druckleitungen (27, 31, 33, 45, 49) zwischen dem Druckspeicher (25) und den Steuerventilen (35, 37, 51) der Kupplungen (K1, K2) sowie der Gangschaltelemente (22) frei von Drucksensoren sind.

5. Doppelkupplungsgetriebe nach einem der vorhergehenden Ansprüche, **dadurch gekennzeichnet, dass** im normalen Fahrbetrieb mittels der ersten und zweiten Drucksensoren (41, 43) der an der ersten Kupplung (K1) und an der zweiten Kupplung (K2) anliegende Hydraulikdruck erfassbar ist, und insbesondere erfasst wird, ob die ersten und zweite Kupplung (K1, K2) drucklos oder druckbeaufschlagt ist.

6. Doppelkupplungsgetriebe nach einem der vorhergehenden Ansprüche, **dadurch gekennzeichnet, dass** der vom Druckspeicher (25) vorgegebene Speicherdruck (pₛ) im normalen Fahrbetrieb in einer Größenordnung von 30 bar liegt, und nach erfolgtem Druckreduziermodus der Speicherdruck (pₛ) auf 0 bis 10 bar reduziert ist.

7. Doppelkupplungsgetriebe nach einem der vorhergehenden Ansprüche, **dadurch gekennzeichnet, dass** der Druckreduziermodus aktivierbar ist, wenn die Steuereinheit (39) erkennt, dass das Fahrzeug stillgelegt ist und der Fahrer das Fahrzeug verlässt, oder durch eine werksseitige Betätigung eines Transportschalters im Falle einer längeren Auslieferzeitdauer.

8. Verfahren zur Durchführung eines Druckreduziermodus in einem Hydrauliksystem eines Doppelkupplungsgetriebes nach einem der vorhergehenden Ansprüche.

## Claims

1. Dual-clutch transmission for a vehicle, with a hydraulic system for actuating hydraulic cylinders (23) of the clutches (K1, K2) and the gearshift elements (22) of the dual-clutch transmission, said hydraulic system comprising a pressure accumulator (25) for providing an accumulator pressure (pₛ) in the hydraulic system, wherein a control valve (35, 37) which is controllable by a control unit (39) is arranged in each pressure line (31, 33) routed to the hydraulic cylinders (23) of the first clutch (K1) and the second clutch (K2), the control valves being configured to adjust the hydraulic pressure applied to the first and second clutch (K1, K2), first and second pressure sensors (41, 43) being allocated to the control unit (39) for detecting the hydraulic pressure applied to the first and second clutch (K1, K2), and said control unit (39) configured to activate a pressure reduction mode when detecting an extended downtime of the vehicle, so as to reduce the accumulator pressure (pₛ) provided by the pressure accumulator (25), **characterized in that** in the pressure reduction mode, the control unit (39) continuously opens the control valve (35) associated with the first clutch (K1), and that the pressure sensor (41) associated to the first clutch (K1) is integrated together with the control unit (39) in a control loop (R), in which the first pressure sensor (41) assumes a detection of an actual value of the accumulator pressure (p_{Ist}).

2. Dual-clutch transmission according to claim 1, **characterized in that** in the pressure reduction mode the control unit (39) is configured to adjust the control valve (37) of the second clutch (K2) cyclically between open and closed positions so as to cause a pressure loss as a result of leakage during the adjusting movement and to thereby reduce the accumulator pressure (pₛ).

3. Dual-clutch transmission according to claim 1 or 2, **characterized in that** the hydraulic system comprises a clutch hydraulic circuit (A), by which the clutches (K1, K2) are hydraulically operated, and a gear actuator hydraulic circuit (B), by which the gearshift elements (22) are hydraulically operated, and in particular the gear actuator hydraulic circuit (B) is under no pressure in the pressure reduction mode and thus shut down.

4. Dual-clutch transmission according to any of the preceding claims, **characterized in that** the pressure lines (27, 31, 33, 45, 49) between the pressure accumulator (25) and the control valves (35, 37, 51) of the clutches (K1, K2) and the gearshift elements (22) are free of pressure sensors.

5. Dual-clutch transmission according to any of the preceding claims, **characterized in that** in a normal driving mode, the hydraulic pressure applied to the first clutch (K1) and the second clutch (K2) can be ascertained by the first and second pressure sensors (41, 43), and in particular it is ascertained whether the first and second clutch (K1, K2) are under no pressure or are under pressure.

6. Dual-clutch transmission according to any of the preceding claims, **characterized in that** the accumulator pressure (pₛ) determined by the pressure accumulator (25) is in a normal driving mode in the order of 30 bar, and the accumulator pressure (pₛ) is reduced to 0 to 10 bar after implementation of the pressure reduction mode.

7. Dual-clutch transmission according to any of the preceding claims, **characterized in that** the pressure reduction mode can be activated when the control unit (39) detects that the vehicle is shut down and a driver leaves the vehicle, or in the event of a factory-based actuation of a transport switch in the event of a longer delivery period.

8. Method for carrying out a pressure reduction mode in a hydraulic system of a dual-clutch transmission according to any of the preceding claims.

## Revendications

1. Boîte de vitesses à double embrayage pour un véhicule, avec un système hydraulique pour actionner des cylindres hydrauliques (23) des embrayages (K1, K2) et des éléments de changement de vitesse (22) de la boîte de vitesses à doublé embrayage, lequel système hydraulique présente un accumulateur de pression (25) pour fournir une pression accumulée (pₛ) dans le système hydraulique, une soupape de commande (35, 37) pouvant être commandée par une unité de commande (39) étant respectivement disposée dans les conduites de pression (31, 33) menant aux cylindres hydrauliques (23) du premier embrayage (K1) et du deuxième embrayage (K2), la pression hydraulique présente au niveau du premier et du deuxième embrayage (K1, K2) étant réglable avec lesdites soupapes de commande, un premier et un deuxième capteur de pression (41, 43), qui détectent la pression hydraulique présente au niveau du premier et du deuxième embrayage (K1, K2) étant associés à ladite unité de commande (39), et ladite unité de commande (39) activant lors de la détection d'un temps d'immobilisation plus long du véhicule un mode de réduction de pression, dans lequel la pression accumulée (pₛ) fournie par l'accumulateur de pression (25) peut être réduite, **caractérisée en ce que**, dans le mode de réduction de pression, l'unité de commande (39) ouvre sans interruption la soupape de commande (35) associée au premier embrayage (K1), et **en ce que** le capteur de pression (41) associé au premier embrayage (K1) est intégré conjointement avec l'unité de commande (39) dans un circuit de régulation (R), dans lequel le premier capteur de pression (41) prend en charge la détection de valeur réelle de pression accumulée (pᵢₛₜ).

2. Boîte de vitesses à double embrayage selon la revendication 1, **caractérisée en ce que**, dans le mode de réduction de pression, l'unité de commande (39) déplace la soupape de commande (37) du deuxième embrayage (K2) cycliquement entre la position ouverte et la position fermée de sorte qu'une fuite lors du déplacement de réglage a pour conséquence des pertes de pression et ce faisant une pression accumulée (pₛ) réduite.

3. Boîte de vitesses à double embrayage selon la revendication 1 ou 2, **caractérisée en ce que** le système hydraulique présente un circuit hydraulique d'embrayage (A), avec lequel les embrayages (K1, K2) peuvent être commandés de manière hydraulique, et un circuit hydraulique de réglage de vitesse (B), avec lequel les éléments de changement de vitesse (22) peuvent être commandés de manière hydraulique, et **en ce qu'**en particulier dans le mode de réduction de pression, le circuit hydraulique de réglage de vitesse (B) est commuté sans pression, c'est-à-dire est arrêté.

4. Boîte de vitesses à double embrayage selon l'une quelconque des revendications précédentes, **caractérisée en ce que** les conduites de pression (27, 31, 33, 45, 49) entre l'accumulateur de pression (25) et les soupapes de commande (35, 37, 51) des embrayages (K1, K2) ainsi que des éléments de changement de vitesse (22) sont dépourvues de tout capteur de pression.

5. Boîte de vitesses à double embrayage selon l'une quelconque des revendications précédentes, **caractérisée en ce que**, dans le fonctionnement de conduite normal, la pression hydraulique présente au niveau du premier embrayage (K1) et au niveau du deuxième embrayage (K2) peut être détectée au moyen du premier et du deuxième capteur de pression (41, 43), et il est détecté en particulier si le premier et le deuxième embrayage (K1, K2) sont sans pression ou sont soumis à l'action d'une pression.

6. Boîte de vitesses à double embrayage selon l'une quelconque des revendications précédentes, **caractérisée en ce que** la pression accumulée (pₛ) prescrite par l'accumulateur de pression (25) est de l'ordre de 30 bar lors du fonctionnement de conduite normal, et la pression accumulée (pₛ) est réduite à une valeur allant de 0 à 10 bar après le mode de réduction de pression passé avec succès.

7. Boîte de vitesses à double embrayage selon l'une quelconque des revendications précédentes, **caractérisée en ce que** le mode de réduction de pression peut être activé lorsque l'unité de commande (39) identifie le fait que le véhicule est immobile et que le conducteur quitte le véhicule, ou par un actionnement d'un commutateur de transport en atelier dans le cas d'une durée de livraison plus longue.

8. Procédé pour la mise en oeuvre d'un mode de réduction de pression dans un système hydraulique d'une boîte de vitesses à double embrayage selon l'une quelconque des revendications précédentes.
